# EUROPÄISCHE PATENTSCHRIFT

(11) **EP 3 008 818 B1**
(45) Veröffentlichungstag und Bekanntmachung des Hinweises auf die Patenterteilung: **17.10.2018**
(21) Anmeldenummer: 14729854.1
(22) Anmeldetag: 16.05.2014
(51) Int. Cl.: H02P 29/02, H02P 6/08

(54) **VERFAHREN UND VORRICHTUNG ZUM BETRIEB EINES ELEKTROMOTORISCHEN GEBLÄSEANTRIEBS**
METHOD AND APPARATUS FOR THE OPERATION OF AN ELECTRIC MOTOR FAN DRIVE
PROCÉDÉ ET DISPOSITIF DE FONCTIONNEMENT D'UN ENTRAÎNEMENT DU VENTILATEUR À MOTEUR ÉLECTRIQUE

(30) Priorität: 11.06.2013 DE 102013009680; 04.07.2013 DE 102013011143
(43) Veröffentlichungstag der Anmeldung: 20.04.2016
(73) Patentinhaber: Brose Fahrzeugteile GmbH & Co. Kommanditgesellschaft, Würzburg, 97076 Würzburg (DE)
(72) Erfinder: JOACHIMSMEYER, Dirk, 97262 Hausen (DE); RAUCH, Martin, 97236 Randersacker (DE)
(74) Vertreter: FDST Patentanwälte
(86) Internationale Anmeldenummer: PCT/EP2014/001334
(87) Internationale Veröffentlichungsnummer: WO 2014/198374

(56) Entgegenhaltungen:
- DE-A1- 19 944 194
- JP-A- H05 236 784

## Beschreibung

Die Erfindung betrifft ein Verfahren gemäß dem Oberbegriff des Anspruchs 1 und eine Vorrichtung zum Betrieb eines elektromotorischen Gebläseantriebs (Gebläses) eines Kraftfahrzeugs. Ein derartiges Verfahren ist z. B. aus der DE 199 44 194 A1 bekannt.

Unter Verfahren wird hierbei insbesondere ein Regelverfahren zur Drehzahlregelung eines bürstenlosen, an eine Bordnetzspannung angeschlossenen Elektromotors eines elektromotorisch angetriebenen Gebläses eines Kraftfahrzeugs mittels einer Regel- oder Steuereinrichtung verstanden. Unter Gebläse wird insbesondere ein sogenanntes HVAC-Gebläse (Heating Ventilation Air Condition) oder ein Kühlerlüftergebläse des Kraftfahrzeugs verstanden. insbesondere eines Heizungs- und/oder Klimagebläseantriebs (U_{B}) angeschlossenen und/oder in einen Laststromkreis geschalteten

Drehzahlregelungen von in einem Kraftfahrzeug eingesetzten Gebläse- und/oder Lüftermotoren unter dem Einfluss sich ändernder Betriebsspannungen sowie entsprechende Regel- oder Steuerschaltungen sind beispielsweise bekannt aus der DE 44 08 442 A1, aus der DE 44 44 810 A1, aus der DE 198 55 424 A1 und aus der DE 10 2010 048 747 A1. Die bekannten Steuer- oder Regelverfahren basieren im Wesentlichen auf einer Änderung des Tastverhältnisses von mittels Pulsweitenmodulation (PWM) angesteuerten Halbleiterschaltern im Lastkreis des Elektromotors eines elektromotorischen Gebläseantriebs in Abhängigkeit von einer sich ändernden Betriebs- oder Bordnetzspannung.

Aufgrund der Regelung der Drehzahl eines solchen Elektromotors bzw. elektromotorischen Gebläseantriebs können insbesondere bei maximaler oder hundertprozentiger Aussteuerung der Drehzahlregelung erkanntermaßen Drehzahlschwingungen auftreten, wenn das Bordnetz, insbesondere eine Bordnetzspannung und/oder ein Bordnetzstrom, des Kraftfahrzeugs schwankt. Derartige Schwingungen des Bordnetzes können auch betriebsbedingt oder bestimmungsgemäß gewünscht oder gefordert sein, beispielsweise zur Rekurperation der Fahrzeugbatterie. Dabei können beispielsweise Spannungsänderungsgradienten von 3V/s bei Generatorsollspannungen von maximal 15,5V und minimal 12V auftreten.

Derartige Schwingungen sind im Gebläseluftstrom akustisch wahrnehmbar, also hörbar. Daher ist es häufig notwendig, den Elektromotor entsprechend hoch, d. h. übermäßig auszulegen, um Stellreserven vorzuhalten oder zur Verfügung zu stellen. Hinzu kommt, dass die maximal erreichbare Drehzahl eines HVAC-Systems von der oder mehreren Klappenstellungen eines Klimagerätes abhängt, also lastabhängig ist, und nicht auf einen festen Wert begrenzt werden kann. Ursächlich für Lastschwankungen oder Laständerungen können auch andere Betriebsbedingungen im Fahrzeug sein. Demzufolge kann der eingesetzte Antriebsmotor entsprechend kostenintensiv sein und/oder ein maximaler Luftstrom (100 %-Luftstrom) im Fahrzeug kann nicht genutzt werden.

Diese Nachteile sind insbesondere bei einem Bürstenmotor und/oder einem bürstenlosen Gleichstrommotor zu erwarten, der einen Bürstenmotor nachbildet, zumal dieser systembedingt eine entsprechende Stellreserve aufweisen muss. Diese sogenannte Gleichstrom- oder DC-Emulation (Nachbildung der DC-Kennlinie) bedeutet, dass die sich einstellende Motordrehzahl bezogen auf einen vom Bedienteil vorgegebenen Set-Point mit steigendem Motorstrom sinkt.

Aus der DE 199 44 194 A1 ist ein mit Überlastschutz versehener elektronisch kommutierbarer Motor bekannt, dessen Endstufen über eine elektronische Steuereinheit mittels PWM-Steuersignalen ansteuerbar und von einer Versorgungsspannung speisbar sind. Eine Begrenzung auf eine maximale Belastung mit Überlastungsschutz wird dadurch erreicht, dass in Abhängigkeit von der Größe der Versorgungsspannung und des vorgegebenen Sollwertes für die PWM-Steuerung zumindest ab der Überschreitung der Nennspannung des Motors die Pulsweiste der PWM-Steuersignale auf eine Weite reduzierbar sind, die eine Überlastung des Motors und der elektronischen Bauteile durch Begrenzung der Motorleistung verhindern.

Aus der JP H05 236784 A ist eine Regelung für einen elektromotorisch angetriebenen Staubsauger bekannt, der je nach Betriebsbedingung eine höhere oder niedrigere Saugleistung erzeugt. Die bekannte Regelung stellt die jeweils erforderliche Leistung auch bei Netzschwankungen der Versorgungsspannung zur Verfügung. Hierzu wird ein Strom-Sollwert entsprechend nachgeführt, während die Solldrehzahl des Motors bis zu einer bestimmten, geforderten Saugleistung konstant gehalten wird.

Der Erfindung liegt die Aufgabe zugrunde, ein besonders geeignetes Verfahren zum Betrieb eines elektromotorischen Gebläseantriebs (Gebläses) eines Kraftfahrzeugs und eine hiernach arbeitende Vorrichtung anzugeben. Insbesondere soll das Gebläse möglichst geräuscharm arbeiten. Hierzu sollen geeigneterweise akustische Einflüsse in Folge von Schwankungen eines den Gebläseantrieb versorgenden Bordnetzes begrenzt werden.

Diese Aufgabe wird bezüglich des Verfahrens mit den Merkmalen des Anspruchs 1 und bezüglich der Vorrichtung mit den Merkmalen des Anspruchs 3 erfindungsgemäß gelöst. Vorteilhafte Weiterbildungen, Ausgestaltungen und Varianten sind Gegenstand der Unteransprüche.

Hierzu wird zum Betreiben eines drehzahlgeregelten oder drehzahlgesteuerten, an eine Bordnetzspannung eines Kraftfahrzeugs angeschlossenen elektrischen Gebläseantriebsmotors dessen Motordrehzahl auf einen vorgegebenen ersten Drehzahlsollwert geregelt wird. Wenn die Bordnetzspannung schwankt, wird die Motordrehzahl auf einen im Vergleich zum ersten Drehzahlsollwert niedrigen Drehzahlsollwert geregelt. Geeigneterweise wird die Motordrehzahl des Elektromotors in Abhängigkeit einer aktuellen Klappenstellung eines als HVAC-System arbeitenden Gebläses und/oder in Abhängigkeit von einer aktuellen Motorlast des Elektromotors geregelt.

Bei dem Verfahren wird die Motordrehzahl für eine vorgegebene oder vorgebbare Zeit auf einen in Abhängigkeit von Spannungsschwankungen eingestellten Drehzahlsollwert geregelt. Dieser ist kleiner ist als eine vorgegebene Maximaldrehzahl. Diese zeitlich begrenzte Drehzahlregelung erfolgt während eines eingestellten Zeitglieds. Dabei erfolgt diese zeitlich begrenzte Drehzahlregelung auf einen gegenüber einer Maximaldrehzahl oder gegenüber einem ersten Drehzahlsollwert verringerten Drehzahlsollwert und nach Ablauf des Zeitglieds erneut auf den ersten Drehzahlsollwert.

Ausgehend von einem Anfangsniveau wird ein, vorzugsweise maximaler, Drehzahlsollwert in Abhängigkeit des Verlaufs einer, insbesondere erstmaligen, Spannungsabsenkung der Bordnetzspannung zunächst auf ein Übergangs- oder Zwischenniveau abgesenkt und nach Ablauf eines ersten Zeitglieds bzw. einer ersten Zeitspanne auf dem abgesenkten Niveau konstant gehalten sowie nach Ablauf des ersten und/oder eins zweiten Zeitglieds bzw. einer zweiten Zeitspanne erneut auf das Anfangsniveau eingestellt. Zusätzlich kann der (maximale) Drehzahlsollwert ausgehend vom Anfangsniveau in Abhängigkeit des Lastverlaufs oder eines Lastanstiegs zunächst auf das Übergangs- oder Zwischenniveau abgesenkt und nach Ablauf des ersten Zeitglieds bzw. der ersten Zeitspanne auf dem abgesenkten Niveau konstant gehalten sowie nach Ablauf des ersten bzw. zweiten Zeitglieds (zweite Zeitspanne) erneut auf das Anfangsniveau eingestellt werden.

Die Vorrichtung zur Drehzahlregelung eines elektromotorischen Gebläseantriebs, vorzugsweise eines HVAC-Systems eines Kraftfahrzeugs, umfasst einen den Elektromotor ansteuernden Leistungsschalter in Form vorzugsweise mehrerer in Brückenschaltung verschalteter Halbleiterschalter, der (die) in einen mit einer Bordnetzspannung beaufschlagten Lastromkreis geschaltet ist (sind). Zudem umfasst die Vorrichtung einen Regeler (Regeleinrichtung oder Regelschaltung), der (die) programm- und/oder schaltungstechnisch zur Durchführung des erfindungsgemäßen Verfahrens vorgesehen und eingerichtet ist.

Erfindungsgemäß ist somit vorgesehen, dass der das Gebläse antreibende Elektromotor die maximal mögliche Drehzahl, insbesondere für die augenblickliche Klappenstellung eines HVAC-Systems, erlernt und/oder speichert, sobald der Regler über eine zu definierende Schwelle gelangt bzw. innerhalb einer Regeleinrichtung (Regelvorrichtung) diese Schwelle überschritten wird. Während des Betriebs des Gebläseantriebs wird daher in Abhängigkeit der aktuellen Klappenstellung und/oder in Abhängigkeit von einer aktuellen Motorlast, die Motordrehzahl zunächst auf den vorgegebenen ersten Drehzahlsollwert und dann auf einen im Vergleich zum ersten Drehzahlsollwert niedrigen Drehzahlsollwert geregelt, wenn die Bordnetzspannung und/oder die Last des Laststromkreises schwankt.

Geeigneterweise wird mittels der Regel- oder Steuereinrichtung die Motordrehzahl des Gebläseantriebs bzw. dessen Elektromotors für die vorgegebene Zeit, also während des eingestellten Zeitintervalls oder -glieds, auf den in Abhängigkeit von Spannungs- und/oder Lastschwankungen eingestellten Drehzahlsollwert geregelt, der kleiner ist als die vorgegebene Maximaldrehzahl. Hierbei wird die Motordrehzahl zweckmäßigerweise während des Zeitglieds auf einen gegenüber einer Maximaldrehzahl oder einem ersten Drehzahlsollwert verringerten Drehzahlsollwert und erste nach Ablauf des Zeitglieds erneut auf die Maximaldrehzahl bzw. auf den ersten Drehzahlsollwert geregelt.

Besonders bevorzugt wird ein erster, vorzugsweise maximaler, Drehzahlsollwert ausgehend von einem Anfangsniveau, insbesondere in Abhängigkeit des Verlaufs einer (erstmaligen) Spannungsabsenkung der Bordnetzspannung und/oder in Abhängigkeit des Lastverlaufs und/oder eines Lastanstiegs, zunächst, insbesondere auf ein Übergangs- oder Zwischenniveau, abgesenkt und nach Ablauf eines ersten Zeitglieds bzw. einer ersten Zeitspanne auf dem abgesenkten Niveau konstant gehalten sowie nach Ablauf des ersten und/oder eins zweiten Zeitglieds bzw. einer zweiten Zeitspanne erneut auf das Anfangsniveau eingestellt wird.

Die mit der Erfindung erzielten Vorteile bestehen insbesondere darin, dass das Gebläse unter praktisch allen Betriebsbedingungen stets mit zumindest annähernd hundert Prozent Leistung bei gleichzeitig akzeptablen akustischen Beeinträchtigungen (z. B. Schwebungen) genutzt werden kann, indem das Gebläse die maximale Drehzahl und damit die maximale Luftmenge stets neu erlernt. Dies führt vorteilhafterweise dazu, dass der Antriebsmotor (Elektromotor) nicht übermäßig ausgelegt (über-ausgelegt) werden muss und gleichzeitig kostengünstig hergestellt werden kann.

Nachfolgend werden Ausführungsbeispiele der Erfindung anhand einer Zeichnung näher erläutert. Darin zeigen:
- Fig. 1: in einem Drehzahl-Zeit-Diagramm den Verlauf einer sich über die Zeit ändernden Bordnetzspannung (U_{DC}) und einer sich hierzu synchron verhaltenden Ist-Drehzahl (Drehzahl- oder Drehzahlistwertverlauf) (nᵢₛₜ) sowie einen zeitlich konstanten Verlauf einer Solldrehzahl (nₛₒₗₗ),
- Fig. 2: in einem Diagramm gemäß Fig. 1 ein Beispiel für eine Drehzahlvariation in Folge von Bordnetzschwankungen im Falle eines Einbruchs und anschließenden Wiederanstiegs der Bordnetzspannung inklusive eines zeitlichen Aussteuerungsverlaufs (ma),
- Fig. 3: in einer Darstellung gemäß Fig. 2 die Variation der Drehzahl in Folge von Bordnetzschwankungen bei sich über die Zeit mehrfach (variabel) ändernder Bordnetzspannung, beispielsweise in Folge einer Rekuperation,
- Fig. 4a und 4b: den Drehzahlverlauf in Abhängigkeit der Bornetzspannung mit und ohne sinusförmige Spannungsschwankungen mit bzw. ohne Drehzahlvariation,
- Fig. 5: in einem Blockschaltbild eine Regelungsschaltung zur Drehzahlregelung und/oder Drehzahlvariation in Folge von Bordnetzschwankungen in einer ersten Ausführungsform, und
- Fig. 6: in einem Blockschaltbild eine Regelungsschaltung zur Drehzahlregelung und/oder Drehzahlvariation in Folge von Bordnetzschwankungen in einer zweiten Ausführungsform.

Einander entsprechende Teile und Größen sind in allen Figuren mit den gleichen Bezugszeichne versehen.

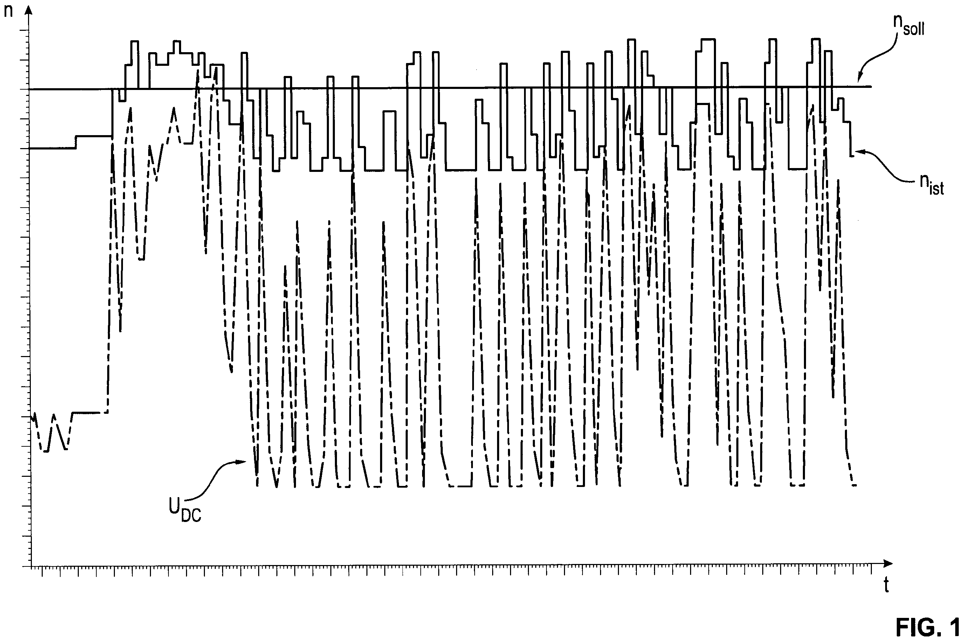

Fig. 1 zeigt den sich an einer Aussteuergrenze, beispielsweise bei maximaler Motorspannung, mit der Bordnetzspannung U_{DC} ändernden Verlauf der Ist-Drehzahl nᵢₛₜ bei einem vorgegebenen Drehzahlsollwert nₛₒₗₗ eines ein Kraftfahrzeuggebläse antreibenden Elektromotors. Im linken Teil des Diagramms erkennbar erreicht die Ist-Drehzahl nᵢₛₜ bei entsprechend niedriger Bordnetzspannung U_{DC} nicht den Drehzahlsollwert nₛₒₗₗ. Über die Zeit t sind relativ große Drehzahlschwankungen des sich synchron mit dem Verlauf der Bordnetzspannung U_{DC} ändernden Verlaufs der Ist-Drehzahl nᵢₛₜ um den Drehzahlsollwert nₛₒₗₗ erkennbar. Ein derartiges Drehzahlverhalten eines elektromotorischen Gebläse- oder Lüfterantriebs führt beispielsweise im Fahrgastraum des Kraftfahrzeugs erkanntermaßen zu unerwünschten Geräuschentwicklungen.

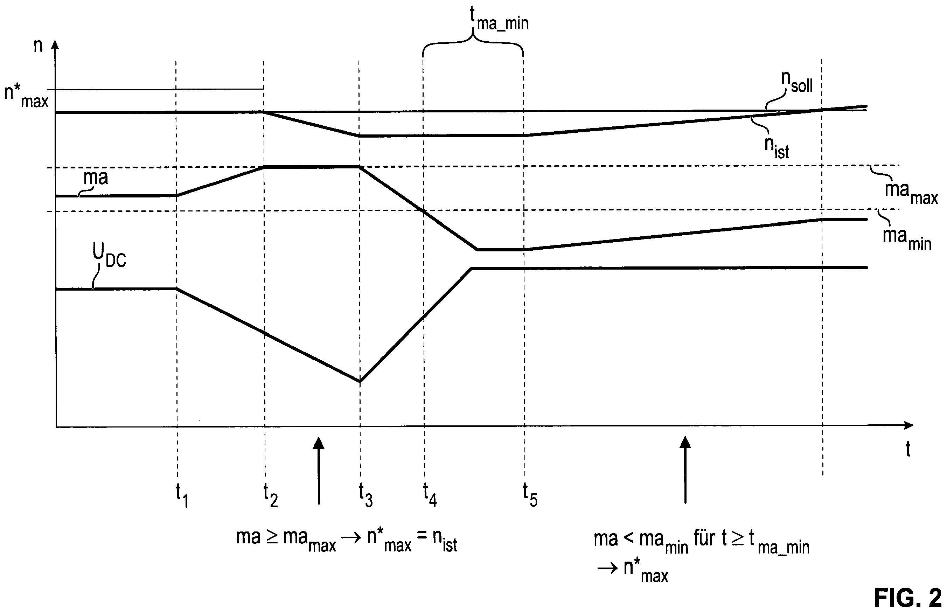

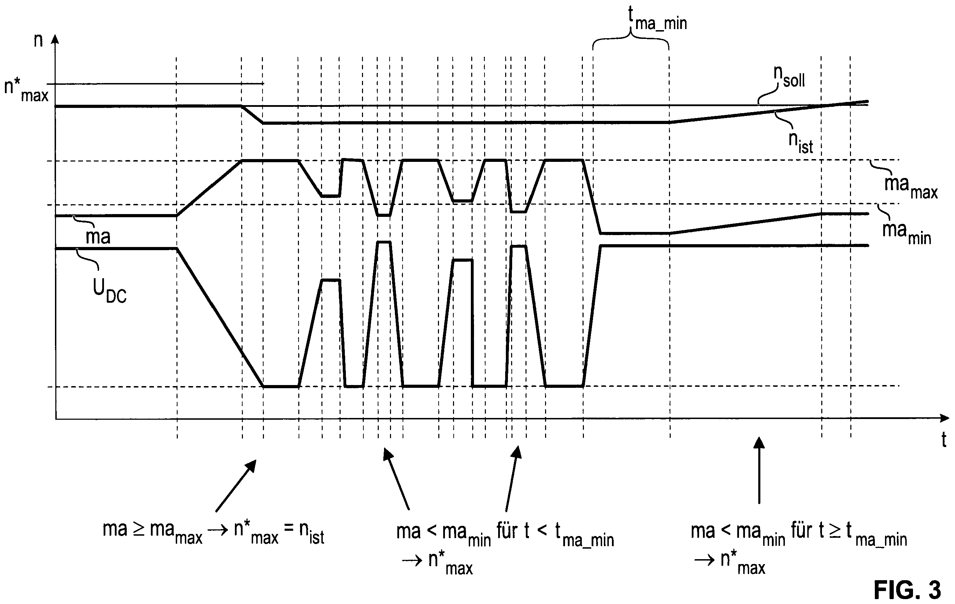

Die Figuren 2 und 3 zeigen in ähnlichen Diagrammen während einer anfänglich annähernd konstanten Bordnetzspannung U_{DC} eine nahezu vollständige Überdeckung der Ist-Drehzahl nᵢₛₜ mit dem Drehzahlsollwert nₛₒₗₗ. Zu einem bestimmten Zeitpunkt t₁ sinkt die Bordnetzspannung U_{DC} rampenartig auf einen Minimalwert zum Zeitpunkt t₃ ab, um anschließend erneut auf ein erhöhtes Niveau rampenartig anzusteigen.

Während Fig. 2 die Drehzahlvariation, d. h. insbesondere die Anpassung des Drehzahlsollwertes nₛₒₗₗ an einem lokalen Spannungseinbruch der Bordnetzspannung U_{DC} zeigt, veranschaulicht Fig. 3 eine Drehzahlvariation im Falle beispielsweise einer Rekuperation mit mehrfachen Spannungseinbrüchen und Spannungsanstiegen der Bordnetzspannung U_{DC}.

Oberhalb des Verlaufs der Bordnetzspannung U_{DC} ist der Verlauf eines Aussteuergrades ma (modulation amplitude) einer Drehzahlregelung gezeigt. Dieser Aussteuergrad ma erreicht im Zeitintervall zwischen einer Zeit t₂ und der Zeit t₃ einen Maximalwert maₘₐₓ und unterschreitet zu einer Zeit t₄ einen Minimalwert maₘᵢₙ. Während des Zeitintervalls t₃ - t₂ wird der Drehzahlsollwert nₛₒₗₗ abgesenkt und verbleibt auf diesem Niveau bis zu einem Zeitpunkt t₅, zu dem ein Zeitglied Δt = t_{ma_min} seit dem Zeitpunkt t₄ des Unterschreitens der Minimalwerte maₘᵢₙ des Aussteuergrades ma abgelaufen ist. Ab diesem Zeitpunkt t₅ wird der Drehzahlsollwert nₛₒₗₗ kontinuierlich auf das ursprüngliche Niveau angehoben.

Prinzipiell wird demnach die maximale Drehzahl n*ₘₐₓ des Gebläseantriebs bzw. des Elektromotors auf Basis des Aussteuergrades ma einer Regelung oder eines geregelten Leistungsteils bestimmt und im Bedarfsfall, d. h. bei Überschreiten eines Maximalwertes maₘₐₓ reduziert. Wird über einen längeren Zeitraum t eine Abnahme des Aussteuergrades ma erkannt, so erfolgt eine schrittweise Erhöhung der erlaubten maximalen Drehzahl. Der Aussteuergrad ma wird hierbei als aktuelle Ausgangsspannung in Bezug auf die maximal mögliche Ausgangsspannung definiert.

Analog wird bei dem Verlauf der Bordnetzspannung U_{DC} gemäß Fig. 3 der Drehzahlsollwert nₛₒₗₗ mit der abfallenden Flanke der Bordnetzspannung U_{DC} abgesenkt. Anschließend verläuft der Drehzahlsollwert nₛₒₗₗ auf einem vergleichsweise niedrigen Niveau konstant, wobei dieser niedrige Drehzahlsollwert vorzugsweise bei Erreichen des tiefsten Spannungswertes der Betriebsspannung U_{DC} eingestellt wird.

Solange der Aussteuergrad ma kleiner als ein Minimalwert maₘᵢₙ für eine Zeit t < t_{ma_min} ist, wird der maximale Drehzahlsollwert n*ₘₐₓ nicht erhöht, d. h. die interne maximale Drehzahl bleibt konstant (ma < maₘᵢₙ für t < t_{ma_min} → n*ₘₐₓ). Ist der Aussteuergrad ma größer oder gleich dem maximalen Aussteuergrad maₘₐₓ, so wird der maximale Drehzahlsollwert n*ₘₐₓ dem Drehzahlistwert nᵢₛₜ gleichgesetzt, d. h. die interne maximale Drehzahl wird mitgeführt (ma ≥ maₘₐₓ → n*ₘₐₓ = nist). Ist der Aussteuergrad ma kleiner als der Minimalwert maₘᵢₙ für eine Zeit t ≥ t_{ma_min}, so wird der maximale Drehzahlsollwert n*ₘₐₓ langsam erhöht (ma < maₘᵢₙ für t ≥ t_{ma_min} → n*ₘₐₓ).

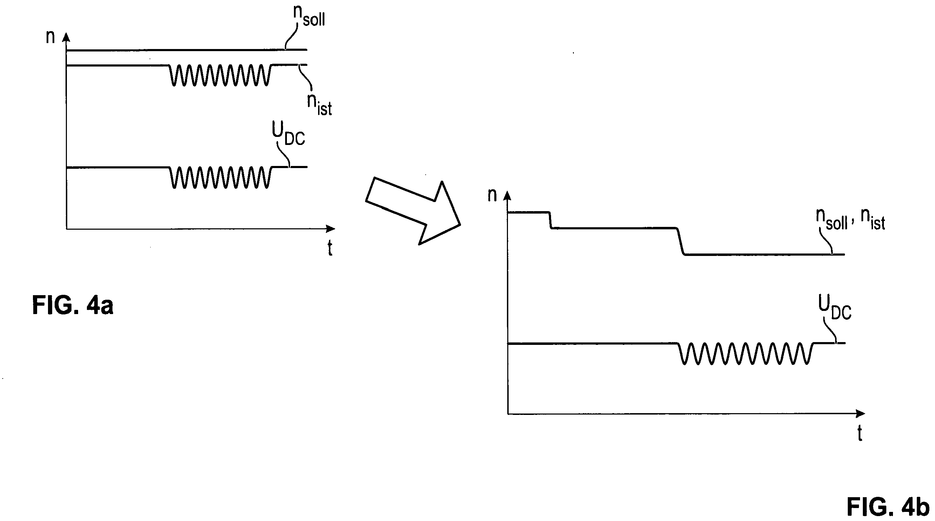

Die Figuren 4a und 4b zeigen das Ergebnis eines Test der Funktionalität der Drehzahlregelung bzw. -steuerung bei einer Bordnetzspannung U_{DC} = 12 V ohne und mit überlagertem Sinus mit 1Vₚₚ/2 Hz. Fig. 4a zeigt der obere Verlauf den Drehzahlsollwert (Soll-Drehzahl) nₛₒₗₗ und die aktuelle Drehzahl (Ist-Drehzahl) nᵢₛₜ in Folge der mit einem Sinus (Sinusverlauf) überlagerten Bordnetzgleichspannung U_{DC}. Erkennbar schwankt die Ist-Drehzahl synchron zu den Schwankungen der Bordnetzspannung. Fig. 4b zeigt das Ergebnis der Drehzahlregelung in Folge einer gezielten Absenkung des Drehzahlsollwertes (Drehzahlvariation) nₛₒₗₗ bei Auftreten der sinusförmigen Schwankungen der Bordnetzspannung U_{DC}. Erkennbar ist die Regelung in der Lage, die Ist-Drehzahl nᵢₛₜ nicht nur vor dem Auftreten der sinusförmigen Spannungsschwankungen, sondern vielmehr auch nach erfolgter Absenkung des Drehzahlsollwertes nₛₒₗₗ auf diesen ohne nennenswerte Drehzahlschwankungen einzuregeln.

Im Ergebnis sind in Folge der reduzierten Drehzahlschwankungen bei auftretenden Spannungs- und/oder Lastschwankungen akustische Auswirkungen und somit Geräuschentwicklungen minimiert, die in Folge vergleichsweise stark schwankender Motordrehzahlen auftreten.

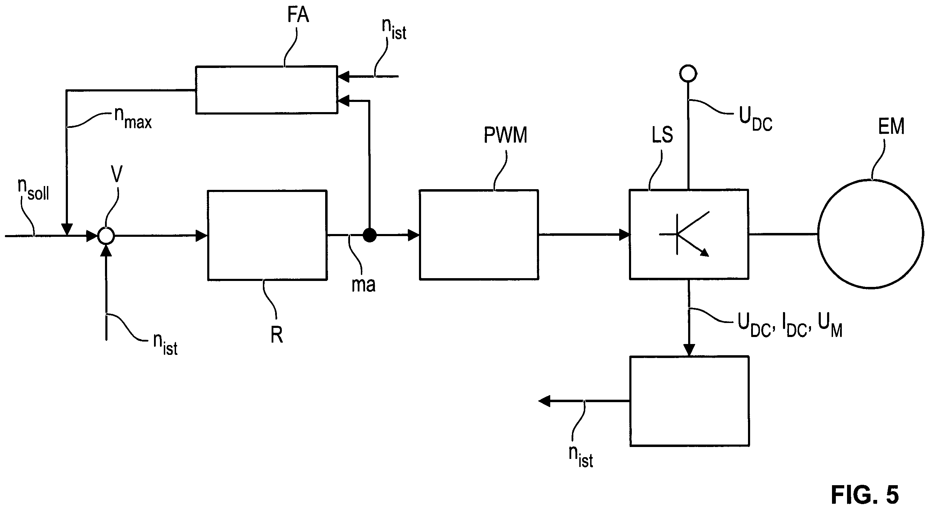

Fig. 5 zeigt in einem prinzipiellen, vereinfachten Blockschaltbild eine Regelungsschaltung oder Vorrichtung zur Drehzahlregelung oder Drehzahlvariation in Folge von Bordnetz- oder Leistungsschwankungen eines ein (nicht näher dargestelltes) Gebläse antreibenden Elektromotors EM. Diesem ist eine nachfolgend als Leistungsschalter bezeichnete Leistungsschalteranordnung LS zugeordnet, die aus einer Anzahl von in einer H-Brückenschaltung verschalteten Leistungsschaltern, beispielsweise MOSFET's, aufgebaut sein kann. Der den Elektromotor EM ansteuernde Leistungsschalter LS ist in einen Laststromkreis geschaltet, der mit der Bordnetzspannung U_{DC} beaufschlagt ist.

Dem Leistungsschalter LS ist ein PWM-Steller PWM (Pulsweitenmodulation) vorgeordnet, der den Leistungsschalter LS ansteuert. Dem PWM-Steller PWM ist ein Regler R vorgeordnet, dem eingangsseitig der von einem Vergleicher V ermittelte Stellwert als Stell-, Regel- oder Führungsgröße aus der Ist-Drehzahl nᵢₛₜ und einem Drehzahlsollwert nₛₒₗₗ bzw. einem modifizierten Drehzahlsollwert zugeführt ist.

Die Modifikation des Drehzahlsollwert nₛₒₗₗ erfolgt anhand eines mit nₘₐₓ bezeichneten Drehzahlkorrekturwertes, der mittels eines vorzugsweise als Software realisierten Funktionsbausteins FA mit einem Algorithmus zur Minimierung von Drehzahlschwankungen ermittelt wird. Diesem Funktionsbaustein FA wird einerseits die Ist-Drehzahl nᵢₛₜ sowie andererseits der aktuelle Aussteuergrad ma zugeführt, der ausgangsseitig des Reglers R abgreifbar ist.

Die Ist-Drehzahl nᵢₛₜ wird mittels eines Sensors oder sensorlos ermittelt, beispielsweise aus der elektromotorischen Kraft (EMK, U_{EMK}) des Elektromotors EM. Die elektromotorischen Kraft ist einerseits proportional zur Drehzahl n und andererseits aus der Differenz der Bordnetzspannung U_{DC} und der aktuellen Motorspannung U_{M} ermittelbar.

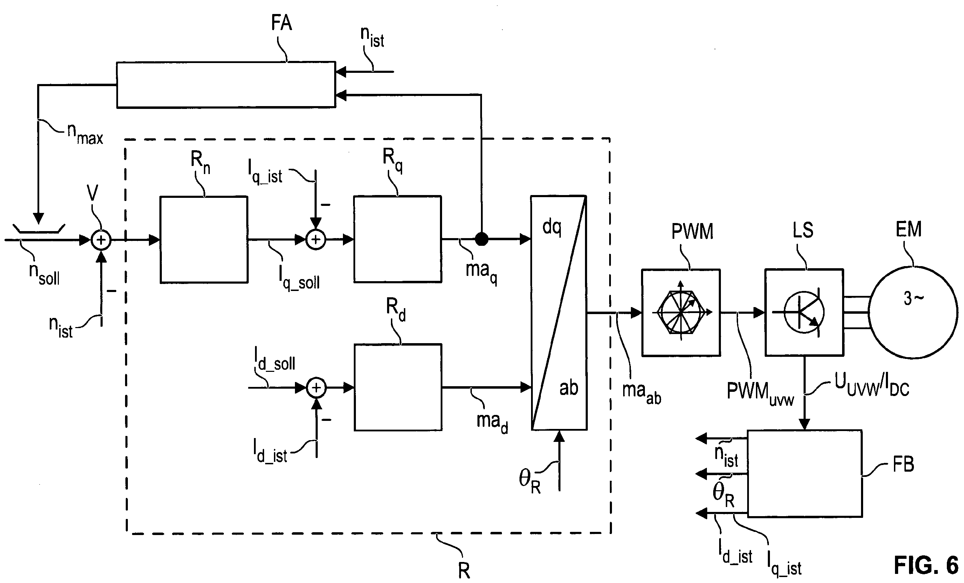

Fig. 6 zeigt eine vergleichsweise komplexe Regelungsschaltung zur Drehzahlvariation, insbesondere in Folge von Bordnetzschwankungen. Im Ausführungsbeispiel gemäß Fig. 6 sind mit I_{d_soll} (ohne Feldschwächung OA) und I_{q_soll} entsprechende Sollwerte der Phasenströme des Elektromotors EM angesetzt. Somit wird die Stellgröße eines I_{q}-Reglers R_{q} und/oder diejenige eines I_{d}-Reglers R_{d} in einfacher Art und Weise unter Berücksichtigung der Rotorlage θ_{R} des Elektromotors EM als Aussteuergrad ma verwendet, wobei ma_{q} der Stellgröße bzw. der maximalen Stellgröße und ma_{ab} der daraus abgeleiteten Stellgröße für den PWM-Steller PWM entspricht.

Die Bestimmung der Ist-Drehzahl (Drehzahlistwert) nᵢₛₜ und der Rotorlage θ_{R} des Elektromotors EM sowie die Ermittlung oder Berechnung der Ist-Werte der Phasenströme I_{q_ist}, und I_{d_ist} erfolgt mittels eines Funktionsbausteins FB aus der (dreiphasigen) Motorspannung U_{uvw} und dem Motorstrom I_{DC} des Elektromotors EM. Hierzu ist der Leistungsschalter LS im Ausführungsbeispiel geeigneterweise als Funktionsbaustein in B6-Schaltung ausgeführt. Hieraus sind besonders einfach und zuverlässig die Drehzahl, die Rotorlage und der jeweilige Phasenstrom des Elektromotors EM anhand der Größen oder Parameter U_{UVW} für die Spannungen der einzelnen Phasen u, v, w und I_{DC} für den Motorstrom ableitbar.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

### Bezugszeichenliste

- EM: Elektromotor
- FA: Funktionsbaustein
- FB: Funktionsbaustein
- LS: Leistungsschalter/-anordnung
- PWM: PWM-Steller
- R: Regler
- R_{d}: I_{d}-Regler
- R_{q}: I_{q}-Regler
- V: Vergleicher

- I_{DC}: Motorstrom
- I_{d,q}: Phasenstrom
- nᵢₛₜ: Drehzahlistwert
- nₛₒₗₗ: Drehzahlsollwert
- n*ₘₐₓ: maximale Motordrehzahl
- ma: Ansteuergrad
- ma_{ab}: Stellgröße
- maₘᵢₙ: Minimalwert
- maₘₐₓ: Maximalwert
- ma_{ab}: Stellgröße
- ma_{q}: Stellgröße
- t_{ma_min}: Zeitglied
- U_{DC}: Bornetzspannung
- U_{uvw}: Motorspannung
- θ_{R}: Rotorlage

## Patentansprüche

1. Verfahren zum Betreiben eines drehzahlgeregelten oder drehzahlgesteuerten Elektromotors (EM) eines Gebläseantriebs, der an eine Bordnetzspannung (U_{B}) eines Kraftfahrzeugs angeschlossenen ist, bei dem die Motordrehzahl (n) des Elektromotors (EM) auf einen vorgegebenen ersten Drehzahlsollwert (nₛₒₗₗ) geregelt wird, und bei dem die Motordrehzahl (n) auf einen im Vergleich zum ersten Drehzahlsollwert (nₛₒₗₗ) niedrigen Drehzahlsollwert geregelt wird, wenn sich die Bordnetzspannung (U_{B}) über die Zeit (t) ändert,
**dadurch gekennzeichnet,**
- **dass** die Motordrehzahl (n) für eine vorgegebene Zeit (t) während eines eingestellten Zeitglieds (Δt) auf einen in Abhängigkeit der Spannungsänderungen eingestellten Drehzahlsollwert (n*ₘₐₓ) geregelt wird, der kleiner ist als der erste Drehzahlsollwert (nₛₒₗₗ),
- **dass** nach Ablauf des Zeitglieds (Δt) erneut auf den ersten Drehzahlsollwert (nₛₒₗₗ) geregelt wird, und
- **dass** der erste Drehzahlsollwert (nₛₒₗₗ) ausgehend von einem Anfangsniveau in Abhängigkeit des Verlaufs einer Spannungsabsenkung der Bordnetzspannung (U_{B}) zunächst auf ein Übergangs- oder Zwischenniveau abgesenkt und nach Ablauf des ersten Zeitglieds (Δt) auf dem abgesenkten Niveau konstant gehalten sowie nach Ablauf des ersten Zeitglieds (Δt) und/oder eines zweiten Zeitglieds erneut auf das Anfangsniveau eingestellt wird.

2. Verfahren nach Anspruch 1,
**dadurch gekennzeichnet,**
**dass** die Motordrehzahl (n) des Elektromotors (EM) in Abhängigkeit einer aktuellen Klappenstellung eines als HVAC-System arbeitenden Gebläses und/oder in Abhängigkeit von einer aktuellen Motorlast des Elektromotors (EM) geregelt wird.

3. Vorrichtung zur Drehzahlregelung eines elektromotorischen Gebläseantriebs, vorzugsweise eines HVAC-Systems eines Kraftfahrzeugs, mit einem den Elektromotor (EM) ansteuernden Leistungsschalter (LS), der in einen mit einer Bordnetzspannung (U_{DC}) beaufschlagten Lastromkreis geschaltet ist, sowie mit einem Regler (R), der programm- und/oder schaltungstechnisch zur Durchführung des Verfahrens nach Anspruch 1 oder 2 vorgesehen und eingerichtet ist.

## Claims

1. Method for operating a speed-regulated or speed-controlled electric motor (EM) of a fan drive, which is connected to an on-board system voltage (U_{B}) of a motor vehicle, in which the motor speed (n) of the electric motor (EM) is regulated to a predetermined first desired speed value (nₛₒₗₗ), and in which the motor speed (n) is regulated to a desired speed value that is lower in comparison to the first desired speed value (nₛₒₗₗ) when the on-board system voltage (U_{B}) changes over time (t),
**characterised in that**,
- for a predetermined period of time (t) during a set time element (Δt), the motor speed (n) is regulated to a desired speed value (n*ₘₐₓ), which is set depending on the voltage changes and which is smaller than the first desired speed value (nₛₒₗₗ),
- after the time element (Δt) has ended, it is regulated back to the first desired speed value (nₛₒₗₗ), and
- proceeding from a starting level depending on the course of a voltage reduction of the on-board system voltage (U_{B}), the first desired speed value (nₛₒₗₗ) is firstly lowered to a transitional or intermediary level and, after the first time element (Δt) has ended, it is kept constant at the lowered level and, after the first time element (Δt) and/or a second time element has ended, it is set back to the starting level.

2. Method according to claim 1,
**characterised in that**
the motor speed (n) of the electric motor (EM) is regulated depending on a current flap position of a fan functioning as an HVAC system and/or depending on a current motor load of the electric motor (EM).

3. Device for the speed regulation of an electromotive fan drive, preferably of an HVAC system of a motor vehicle, having a circuit breaker (LS) that controls the electric motor (EM) and that is switched in a load current circuit supplied with an on-board system voltage (U_{DC}), as well as having a regulator (R) that is provided and set up programmatically or in terms of circuitry for carrying out the method according to claim 1 or 2.

## Revendications

1. Procédé pour faire fonctionner un moteur électrique (EM) à vitesse de rotation régulée ou à vitesse de rotation contrôlée d'un entraînement de ventilateur, lequel moteur est connecté à une tension du réseau de bord (U_{B}) d'un véhicule automobile, procédé dans lequel la vitesse de rotation du moteur (n) du moteur électrique (EM) est réglée à une première valeur de consigne de vitesse de rotation prédéterminée (nₛₒₗₗ), et dans lequel la vitesse de rotation du moteur (n) est réglée à une valeur de consigne de vitesse de rotation plus faible par rapport à la première valeur de consigne de vitesse de rotation (nₛₒₗₗ) lorsque la tension du réseau de bord (U_{B}) fluctue dans le temps (t),
**caractérisé,**
- **en ce que** la vitesse de rotation du moteur (n) est réglée pour un temps prédéterminé (t) pendant une temporisation réglée (Δt) à une valeur de consigne de vitesse de rotation (n*ₘₐₓ) qui est réglée en fonction des fluctuations de tension et qui est inférieure à la première valeur de consigne de vitesse de rotation (nₛₒₗₗ),
- **en ce qu**'après l'écoulement de la temporisation (Δt), la vitesse est à nouveau réglée sur la première valeur de consigne de vitesse de rotation (nₛₒₗₗ), et
- **en ce que** la première valeur de consigne de vitesse de rotation (nₛₒₗₗ) est abaissée depuis un niveau initial tout d'abord à un niveau de transition ou un niveau intermédiaire en fonction de l'évolution d'un abaissement de tension de la tension du réseau de bord (U_{B}), et est maintenue constante au niveau abaissé après l'expiration de la première temporisation (Δt) et est remise au niveau initial après l'expiration de la première temporisation (Δt) et/ou d'une deuxième temporisation.

2. Procédure selon la revendication 1,
**caractérisé en ce que,**
la vitesse de rotation du moteur (n) du moteur électrique (EM) est réglée en fonction d'une position de volet actuelle d'un ventilateur fonctionnant comme un système CVCA et/ou en fonction d'une charge de moteur actuelle du moteur électrique (EM).

3. Dispositif de régulation de la vitesse de rotation d'un entraînement de ventilateur entraîné par un moteur électrique, de préférence d'un système CVCA d'un véhicule automobile, comprenant un interrupteur de puissance (LS) qui commande le moteur électrique (EM) et qui est relié à un circuit de charge alimenté par une tension du réseau de bord (U_{DC}), et comportant un contrôleur (R) qui est prévu et configuré en termes de programmation et/ou de raccordement de circuit pour l'exécution du procédé selon la revendication 1 ou 2.
